Europäisches Patentamt

**European Patent Office**

**Office européen des brevets**

(11) Veröffentlichungsnummer: **0 004 324**
A2

# EUROPÄISCHE PATENTANMELDUNG

(21) Anmeldenummer: 79100721.4

(22) Anmeldetag: 09.03.79

(51) Int. Cl.²: **F 16 K 7/06**

(30) Priorität: 23.03.78 CH 3218/78

(43) Veröffentlichungstag der Anmeldung: 03.10.79
Patentblatt 79/20

(84) Benannte Vertragsstaaten: **CH DE FR GB NL**

(71) Anmelder: **F.Hoffmann-La Roche & Co.
Aktiengesellschaft, Abt. VIII-Pt, CH-4002 Basel (CH)**

(72) Erfinder: **Wuhrmann, Hans-Rudolf, Dr., Rebgasse 9,
CH-4431 Lampenberg (CH)**
Erfinder: **Obrecht, Lorenz, Spitzwaldstrasse 63,
CH-4123 Allschwil (CH)**
Erfinder: **Reymond, Claude, 24 Chemin Briquet,
CH-1209 Genf (CH)**

(74) Vertreter: **Wuesthoff, Franz, Dr.-Ing. et al,
Patentanwälte Wuesthoff -v. Pechmann-Behrens-
Goetz Schweigerstrasse 2, D-8000 München 90 (DE)**

(54) **Mehrwegeventil.**

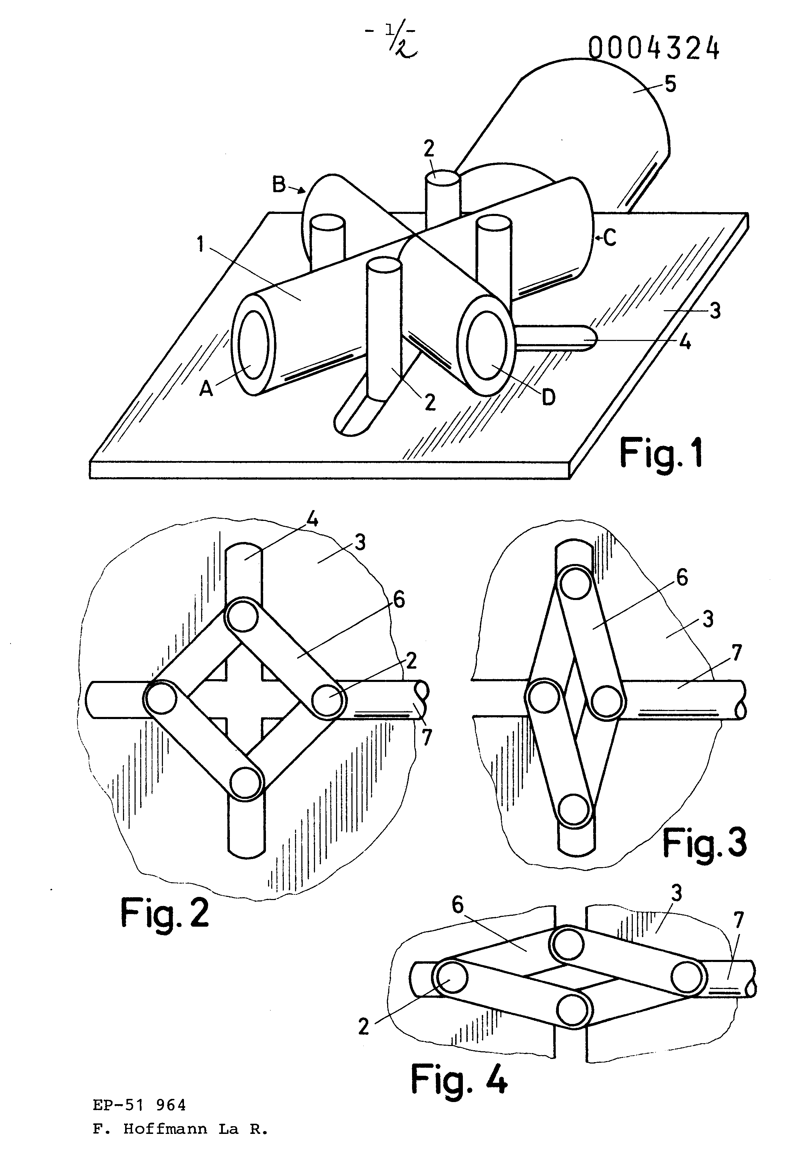

(57) Mehrwegeventil mit einem als Wegwerfteil konzipierten gummielastischen kleinen Ventilkörper und einem Betätigungsmechanismus, wie es insbesondere als Kombination von Schlauchquetschventilen in Geräten der klinischen
Chemie, z. B. Analysengeräten, eingesetzt wird. Um ein
geringes Totvolumen und bessere Reinigungsbedingungen
zu bieten, ist vorgesehen, daß alle Kanäle (A, B, C, D) in
einem einzigen Ventilkörper (1) ausgebildet sind und sich
von dessen äußerer Begrenzung zu einem Knotenpunkt im
Inneren erstrecken. Mit dem Betätigungsmechanismus
(2, 5) läßt sich der Ventilkörper (1) wahlweise in unterschiedlichen Richtungen derart verformen, daß im oder am
Knotenpunkt entsprechend wahlweise Verbindungen zwischen Kanälen geschlossen werden. Der Ventilkörper (1)
kann eine Schlauchverzweigung, insbesondere eine
Schlauchkreuzung, sein (Fig. 1).

F. Hoffmann-La Roche & Co. Aktiengesellschaft, Basel, Schweiz

Vorklassifizierungsnummer: C.P. 79/000029

## Mehrwegeventil

Die Erfindung betrifft ein Mehrwegeventil mit mehreren, insbes. vier, Kanälen mit einem insbesondere als Wegwerfteil ausgebildeten gummielastischen Ventilkörper und einem den Ventilkörper von außen verformenden Betätigungs- bzw. Quetschmechanismus.

Trotz der großen Vielfalt von bekannten Ventilen ergeben sich in der Praxis immer wieder Forderungen, die von einem bekannten Ventil optimal erfüllt werden können. In Geräten für die klinische Chemie, z.B. in Analysengeräten, werden häufig Schlauchquetschventile eingesetzt, weil diese Ventile sich dadurch auszeichnen, daß das als Ventilkörper dienende Schlauchstück leicht zu reinigen und einfach auswechselbar ist und ein billiges Wegwerfteil darstellt. Die meisten anderen Ventiltypen, z.B. Schieberventile, Membranventile, Sitzventile etc., sind meistens wesentlich aufwendiger konstruiert, so daß das Auswechseln des mit dem biologischen Medium in

0004324

Berührung kommenden Teils in der Regel verhältnismässig teuer ist. Schlauchquetschventile können also die bei klinisch-chemischen Geräten auftretenden Forderungen in vielen Fällen sehr gut erfüllen.

Bei Analysengeräten zeichnet sich in jüngster Zeit eine Tendenz dahingehend ab, dass die Probenmengen immer kleiner werden. Dies bedingt unter anderem eine Reduktion der Toträume in den Ventilen. Hinsichtlich dieses Aspekts ergeben sich jedoch bei Schlauchquetschventilen, die zu Mehrwegeventilfunktionen zusammengestellt werden, Probleme. Solche Mehrwegeventile aus Schlauchquetschventilen haben in der Regel grosse Totvolumina.

In dieser Situation lag der Erfindung die Aufgabe zugrunde, nach einem Ventil zu suchen, das folgende Forderungen erfüllt: es sollte Mehrwegefunktionen ermöglichen, gut zu reinigen sein, ein minimales Totvolumen aufweisen und einen Ventilkörper (= Schaltteil) besitzen, der als billiger Wegwerfteil konzipiert sein kann.

Erfindungsgemäß wird diese Aufgabe dadurch gelöst, daß bei dem eingangs genannten Mehrwegeventil in dem Ventilkörper alle Kanäle ausgebildet sind und sich von der äußeren Begrenzung des Ventilkörpers zu einem oder mehreren Knotenpunkten im Inneren des Ventilkörpers erstrecken und daß der Betätigungsmechanismus eine Verformung des Ventilkörpers in unterschiedlichen Richtungen derart zuläßt, daß im oder am Knotenpunkt wahlweise Verbindungen zwischen Kanälen geschlossen werden.

Gemäss einer besonders bevorzugten Ausführungsform des erfindungsgemässen Ventils besteht der Ventilkörper im wesentlichen aus einer rechtwinkligen Schlauchkreuzung, wobei der Betätigungsmechanismus Quetschelemente, z.B. Bolzen, aufweist mit denen der Kreuzungsbereich vorzugsweise diagonal gequetscht werden kann.

Im folgenden werden anhand der beiliegenden Zeichnungen Ausführungsbeispiele der Erfindung beschrieben. Es zeigen

Fig. 1      eine schematische perspektivische Ansicht einer bevorzugten Ausführungsform der Erfindung

Fig. 2-4      Elemente des Betätigungsmechanismus der in Figur 1 gezeigten Ausführungsform in verschiedenen Schaltstellungen

Fig. 5      einen Schnitt durch den Ventilkörper der in Figur 1 gezeigten Ausführungsform

Fig. 6      einen Schnitt durch eine andere Ausführungsform des Ventilkörpers

Fig. 7-10      schematische Darstellungen verschiedener Schaltfunktionen.

Bei der in Figur 1 gezeigten Ausführungsform besteht der Ventilkörper 1 aus einer Schlauchkreuzung aus gummielastischem Material. Je nach den durch das Ventil strömenden Medien und der gewünschten Lebensdauer des Ventilkörpers wird der Fachmann unter den ihm zur Verfügung stehenden Möglichkeiten das am besten geeignete Material, beispielsweise Gummi, Siliconkautschuk, Polyäthylen etc., auswählen. Im Ventilkörper verlaufen also zwei sich kreuzende Kanäle, die zum Zweck der einfacheren Erklärung der Funktion des Ventils im folgenden als vier in der Mitte zusammenmündende Kanäle A-D bezeichnet werden sollen.

Der Ventilkörper mit vier Kanälen stellt, wie gesagt, ein bevorzugtes Ausführungsbeispiel dar. Die Zahl der Kanäle ist jedoch nicht auf vier festgelegt. Sie kann für ausgefallenere Ventilkombinationen auch drei oder fünf, sechs usw. sein. Ausserdem ist es nicht nötig, dass der Ventilkörper nur Kanäle enthält, die in einem Punkt ineinander münden. Es ist auch möglich, in einem Ventilkörper mehrere Kanalsysteme anzulegen, die in verschiedenen Ebenen verlaufen, so dass sich die jeweils in einer Ebene befindlichen Kanäle in jeweils einem Knotenpunkt treffen. Allerdings kommt der Forderung nach Vereinfachung und Verbilligung des Systems die bevorzugte Ausführungsform mit vier Kanälen am weitesten entgegen.

Der Ventilkörper 1 ist so zwischen vier parallel zueinander stehenden Bolzen 2 angeordnet, dass jeweils ein Kanal zwischen zwei Bolzen liegt. Die Bolzen 2 ragen durch eine Grundplatte 3 nach oben, auf der der Ventilkörper aufliegt. Den Durchtritt der Bolzen 2 durch die Grundplatte 3 ermöglichen Schlitze 4, die sich im Winkel von 45° zu den Kanalachsen des Ventilkörpers erstrecken und sich unter der Mitte des Ventilkörpers treffen. Die Bolzen 2 sind somit in der genannten 45° Richtung zu den Achsen der Kanäle verschiebbar.

Zur Verschiebung der Bolzen dient ein Elektromagnet 5 in Kombination mit einem geeigneten Gestänge, das aus den Figuren 2-4 ersichtlich ist.

Die Figuren 2-4 stellen Unteransichten des mittleren Teils der Grundplatte und eines entsprechenden Teils des Betätigungsmechanismus dar. Die Bolzen 2 sind durch vier vorzugsweise gleich lange Laschen 6 miteinander verbunden. Die Verbindung zwischen den Bolzen 2 und den Laschen 6 erlaubt eine Drehbewegung. Wenn die Laschen rechte Winkel miteinander bilden, stehen die Bolzen 2 auf den Eckpunkten eines Quadrats. An einem Bolzen ist zusätzlich zu den Laschen noch eine Stange 7 befestigt, die auf der anderen Seite die Welle des Elektromagneten 5 bildet bzw. mit der Welle des Magneten 5 verbunden ist.

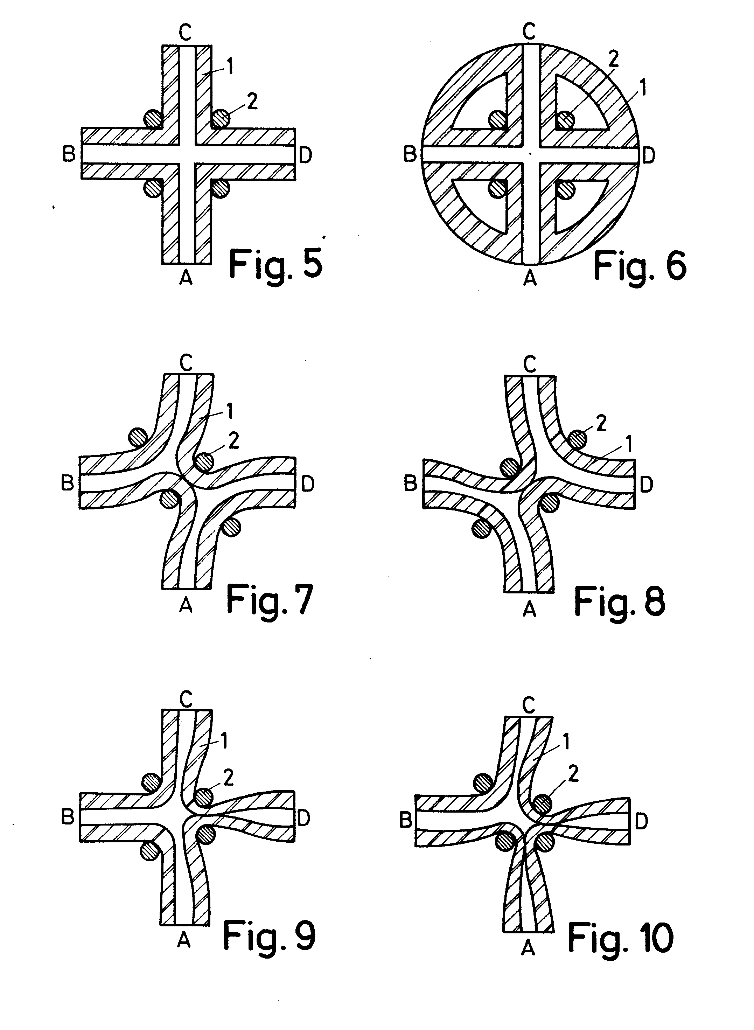

In den beiden Schaltstellungen des Elektromagneten 5 wird die quadratische Anordnung der Bolzen in der in den Figuren 3 und 4 gezeigten Art verändert. Bei diesen Veränderungen gleiten die Bolzen 2 in den Führungsschlitzen 4. Wenn, wie in Figur 3 gezeigt, die Stange 7 in der "Schubstellung" des Elektromagneten steht, wird der Bolzen, an dem die Stange 7 befestigt ist und der diesem gegenüberliegende Bolzen einander angenähert, während die beiden anderen Bolzen nach aussen geschoben werden. In der in Figur 4 gezeigten "Zugstellung" des Elektromagneten werden der mit der Stange 7 verbundene und der dieser gegenüberliegende Bolzen auseinandergezogen und die beiden anderen Bolzen einander angenähert. Durch diese Bewegung der Bolzen wird der Ventilkörper in zwei verschiedene Verformungsstadien gequetscht, die nachfolgend in den Figuren 7 und 8 gezeigt und im Zusammenhang mit diesen Figuren näher beschrieben sind.

Wenn andere Funktionen erforderlich sind, muss der Betätigungsmechanismus mehrere Möglichkeiten zulassen. Anstelle der Betätigung aller vier Quetschbolzen durch einen einzigen Antrieb kann es dann erforderlich sein, jeden einzelnen Bolzen für sich durch einen Antrieb beispielsweise einen Elektromagneten zu betätigen. Je nach dem welche Bolzen gleichzeitig verschoben werden, kann eine grössere Zahl von Schaltfunktionen erreicht werden.

Noch weiter gehende Möglichkeiten ergeben sich dadurch, dass zusätzlich zu den im Winkel von 45° zu den Achsen der Kanäle angeordneten Führungsschlitzen auch noch solche Schlitze vorgesehen werden, die eine Annäherung von zwei nebeneinanderliegenden Bolzen ermöglicht.

Der Betätigungsmechanismus kann auch so ausgebildet sein, dass mehrere Ventilkörper übereinandergelegt werden, die dann gleichzeitig betätigt werden.

Figur 5 zeigt einen Schnitt durch den Ventilkörper in der Ebene der Kanalachsen. In der Mittelstellung der Bolzen, d.h. wenn der Elektromagnet weder Schub- noch Zugkraft ausübt, wird der Ventilkörper nicht verformt, sondern die Bolzen liegen in den Ecken, die von der Aussenwand gebildet werden, an. Die vier Kanäle, die sich in der Mitte treffen, sind mit den Buchstaben A, B, C und D bezeichnet.

Figur 6 zeigt eine alternative Ausführungsform des Ventilkörpers, ebenfalls im Schnitt entlang den Achsen der Kanäle. Bei dieser Ausführungsform sind die vier Arme der Schlauchkreuzung durch einen Ringwulst miteinander verbunden, so dass sich insgesamt äusserlich die Form eines vierspeichigen Rads ergibt. Der Ringwulst dient dazu, den Ventilkörper bei der Verformung zu stabilisieren, damit er seine Position zwischen den vier Bolzen besser beibehält.

In den Figuren 7 und 8 sind die beiden Schaltmöglichkeiten für die in Figur 1 gezeigte Ausführungsform schematisch dargestellt. Diese beiden Schaltmöglichkeiten ergeben sich in immer gleicher Weise, unabhängig davon, ob der Ventilkörper gemäss Figur 5, Figur 6 oder irgend einer anderen geometrischen Konfiguration verwendet wird, solange es sich um ein Element mit vier Kanälen handelt.

Bei der in Figur 7 gezeigten Schaltstellung, die der "Zug"-Stellung des Elektromagneten 5 entspricht, werden durch den in der Zeichnung links unten und den rechts oben liegenden Bolzen die beiden diesen Bolzen entsprechenden Ecken im Inneren der Schlauchkreuzung, d.h. im Knotenpunkt, in dem die Kanäle zusammenlaufen, gegeneinander gepresst. Dadurch entstehen zwei Verbindungen, einmal die zwischen den Kanälen B und C und zum zweiten die zwischen den Kanälen A und D, wobei diese beiden Verbindungen voneinander getrennt sind. In der in Figur 8 gezeigten zweiten Schaltstellung werden die beiden anderen Ecken durch die beiden anderen Bolzen gegeneinander gepresst, wodurch einmal die Verbindung AB und zum zweiten die Verbindung CD entsteht, die ebenfalls voneinander getrennt sind.

Das in Figur 1 gezeigte Ventil, dessen Funktionen in den Figuren 7 und 8 dargestellt sind, ist somit ein 4/2-Wege-Ventil. In dieser Bezeichnungsweise stellt die erste Ziffer die Anzahl der Anschlüsse, nämlich die Anschlüsse A, B, C, D dar, während die zweite Ziffer die Anzahl der Schaltstellungen angibt.

Die erforderlichen Schlauchleitungen zum Anschluss des Ventils können in die Kanäle A - D eingesteckt, gegebenenfalls auch eingeklebt werden. Zu diesem Zweck könnten die Kanäle in ihrem äusseren Teil speziell geformt sein, beispielsweise einen etwas vergrösserten Durchmesser haben. Die Anschlüsse an die notwendigen Schlauchleitungen sind jedoch nicht Gegenstand der Erfindung und können vom Fachmann ohne weiteres nach Bedarf gestaltet werden.

Für die bereits erwähnte Ausführungsform, bei der die Bolzen 2 nicht miteinander verbunden sind und nur gemeinsam betätigt werden können, sondern mit getrennten Antrieben versehen sind, ergeben sich noch zusätzliche Schaltfunktionen. Zwei davon sind stellvertretend in den Figuren 9 und 10 gezeigt. Bei der Schaltstellung in Figur 9 sind beispielsweise nur die beiden Bolzen, zwischen denen der Kanal D liegt, vorgeschoben. Dadurch wird der Kanal D abgequetscht, während die drei übrigen Kanäle A, B und C offen und miteinander verbunden bleiben. Mit entsprechenden Schaltstellungen kann jeder einzelne der Kanäle A, B oder C von den jeweils übrigen 3 Kanälen abgetrennt werden.

Bei der in Figur 10 dargestellten Schaltstellung sind drei Bolzen vorgeschoben, wodurch die beiden Kanäle A und D abgequetscht werden. Die Kanäle B und C bleiben offen und sind miteinander verbunden. Auch diese Schaltstellung ist auf vier verschiedene Kanalkombinationen anwendbar.

Zur Darstellung aller möglichen Schaltfunktionen kann folgende Wahrheitstabelle aufgestellt werden, in der die Buchstaben A, B, C, D offene und miteinander verbundene Kanäle, die Buchstaben $\overline{A}$, $\overline{B}$, $\overline{C}$, $\overline{D}$ geschlossene Kanäle bezeichnen. Ferner sind in der Tabelle die Bolzen mit den Buchstaben a, b, c, d bezeichnet, wobei a zwischen A und B, b zwischen B und C, c zwischen C und D und d zwischen D und A liegen soll.

### Wahrheitstabelle

| Mögliche Funktion | Vorgeschobene Bolzen |
|---|---|
| ABCD | keine |
| $\overline{A}\,\overline{B}\,\overline{C}\,\overline{D}$ | alle |
| AB/CD | b, d |
| BC/DA | a, c |
| ABC$\overline{D}$ | c, d |
| AB$\overline{C}$D | b, c |
| A$\overline{B}$CD | a, b |
| $\overline{A}$BCD | a, d |
| AB$\overline{C}\,\overline{D}$ | b, c, d |
| $\overline{A}\,\overline{B}\,\overline{C}$D | a, b, c |
| $\overline{A}\,\overline{B}$CD | a, b, d |
| $\overline{A}$BC$\overline{D}$ | a, c, d |
| A$\overline{B}$C$\overline{D}$ | alle |
| $\overline{A}$B$\overline{C}$D | alle |

Mit Ausnahme der beiden letzten Schaltfunktionen können alle Stellungen mit den in 45$^{\mathrm{o}}$ zu den Kanalachsen angeordneten Führungsschlitzen laufenden Bolzen durchgeführt werden. Lediglich die beiden letzten Funktionen benötigen eine Verschiebungsmöglichkeit der Bolzen parallel zu den Achsen der Kanäle.

P a t e n t a n s p r ü c h e

1.    Mehrwegeventil mit mehreren, insbes. vier Kanälen, mit einem, insbesondere als Wegwerfteil ausgebildeten, gummielastischen Ventilkörper und einem dem Ventilkörper von außen verformenden Betätigungsmechanismus,

dadurch  g e k e n n z e i c h n e t ,

daß in dem Ventilkörper (1) alle Kanäle (A, B, C, D) ausgebildet sind und sich von der äußeren Begrenzung des Ventilkörpers zu einem  Knotenpunkt

im Inneren des Ventilkörpers erstrecken und daß der Betätigungs-mechanismus (2, 5) eine Verformung des Ventilkörpers in unterschiedlichen Richtungen derart zuläßt, daß im oder am Knotenpunkt   wahlweise Verbindungen zwischen Kanälen geschlossen werden.

2.    Mehrwegeventil nach Anspruch 1, dadurch   g e k e n n - z e i c h n e t ,  daß der Ventilkörper (1) eine Schlauchverzweigung mit drei oder mehr sich in einem Knotenpunkt treffenden Kanälen (A, B, C, D) ist.

3.    Mehrwegeventil nach Anspruch 2, dadurch   g e k e n n - z e i c h n e t ,  daß der Ventilkörper (1) eine Schlauchkreuzung ist.

4.    Mehrwegeventil nach einem der vorangehenden Ansprüche, da-durch  g e k e n n z e i c h n e t ,  daß der Ventilkörper (1) einen umlaufenden Ringwulst aufweist.

5. Mehrwegeventil nach einem der Ansprüche 2 bis 4, dadurch g e k e n n z e i c h n e t , daß der Betätigungsmechanismus vier parallel zueinander stehende und in Führungsschlitzen (4) in einer Grundplatte (3) verschiebbare Bolzen (2) aufweist, die einen solchen Abstand voneinander haben, daß die Schlauchverzweigung (1) dazwischen paßt.

6. Mehrwegeventil nach Anspruch 5, dadurch g e k e n n z e i c h n e t , daß die Bolzen (2) drehbar mit Laschen (6) und über die Laschen untereinander verbunden sind derart, daß mit einem Antrieb (5) alle Bolzen gleichzeitig verschiebbar sind.

\*\*\*

1058

0004324

Fig.1

Fig.2

Fig.3

Fig. 4

EP-51 964
F. Hoffmann La R.

- 2/2 -

0004324

Fig. 5

Fig. 6

Fig. 7

Fig. 8

Fig. 9

Fig. 10